# EUROPEAN PATENT APPLICATION

(11) **EP 3 384 975 A1**
(43) Date of publication of application: **10.10.2018**
(21) Application number: 16870357.7
(22) Date of filing: 31.10.2016
(51) Int. Cl.: B01D 53/68, B01D 53/14, B01D 53/78

(54) **METHOD FOR TREATING EXHAUST GAS CONTAINING ELEMENTAL FLUORINE**

(30) Priority: 01.12.2015 JP 2015234587
(71) Applicant: Showa Denko K.K., Tokyo 105-8518 (JP)
(72) Inventor: MURAKAWA, Minako, Tokyo 105-8518 (JP); SANO, Tomomi, Tokyo 105-8518 (JP); TODA, Asako, Tokyo 105-8518 (JP)
(74) Representative: Strehl Schübel-Hopf & Partner
(86) International application number: PCT/JP2016/082239
(87) International publication number: WO 2017/094417

(57) **Abstract**

A method for treating a fluorine element-containing exhaust gas according to the present invention is characterized by including a first step of contacting the fluorine element-containing exhaust gas with water and a second step of contacting a gas component discharged from the first step with a basic aqueous solution including a reducing agent. The method for treating a fluorine element-containing exhaust gas of the invention efficiently treats the fluorine element-containing exhaust gas by a wet type process, and for example, even when treating an exhaust gas containing a highly concentrated fluorine gas, can sufficiently reduce toxic fluorine-based gases such as oxidizing gases including fluorine and oxygen difluoride and acidic gases including hydrogen fluoride in the treated gas. By performing the treatment in specific two stages, the invention can highly reduce the fluorine-based gases in the treated gas to be discharged, and can significantly reduce the amount of consumption of a basic aqueous solution including a reducing agent used as a chemical solution, which are economical and efficient.

## Description

### TECHNICAL FIELD

The present invention relates to a method for treating a fluorine element-containing exhaust gas that treats the fluorine element-containing exhaust gas and discharges a treated gas containing reduced amounts of fluorine-based gases such as fluorine gas (F₂), oxygen difluoride (OF₂), and hydrogen fluoride (HF) .

### BACKGROUND ART

Fluorine compounds are used in large amounts in a variety of fields, for purposes such as manufacturing of semiconductors, liquid crystals, and the like, raw materials of chemical products and polymer materials, or surface modifications.

Particularly, in manufacturing processes for semiconductors, liquid crystals, and the like, fluorine-based gases such as F₂, NF₃, SiF₄, COF₂, SF₆, and fluorocarbons (such as CF₄, C₂F₆, and C₄F₆) have been conventionally used as gases for etching and cleaning. In processes using fluorine-based gases, gases derived from the used fluorine-based gases or fluorine element-containing gases produced by reaction are discharged as exhaust gases. Additionally, in manufacturing a fluorine gas or a fluorine compound, a gas containing an extremely highly concentrated fluorine element is sometimes discharged as an exhaust gas.

These exhaust gases include highly toxic fluorine-based gases, such as oxidizing gases including fluorine gases and acidic gases including hydrogen fluoride, in high concentration, and therefore, it is necessary to sufficiently remove such toxic gases from the exhaust gases.

As a method for removing toxic gases such as a fluorine gas and hydrogen fluoride from an exhaust gas, there is a conventional dry type process that removes them by filling a solid treatment agent such as calcium carbonate, calcium hydroxide, or active alumina in a fixed phase, but there is a problem in that running cost is high.

As a wet type process, a wet type scrubber using water or an alkaline aqueous solution such as sodium hydroxide is excellent as a method for treating a large amount of gas at low cost, but is known by by-producing more highly toxic oxygen difluoride (OF₂). Oxygen difluoride has an ACGIH allowable concentration (TLV) of 0.05 ppm, which indicates extremely high toxicity, and there has been a problem where oxygen difluoride once generated cannot easily be removed by water or an alkaline aqueous solution, and is discharged from exhaust gas.

As methods for solving the problem in such a wet process, Patent Document 1 discloses a method using a mixed liquid of alkali sulfite and caustic alkali as an absorbing liquid, Patent Document 2 discloses a method using an absorbing liquid that includes a mixture of a basic compound such as sodium hydroxide and a sulfur-based reducing agent such as sodium thiosulfate, and Patent Document 3 discloses a method using a liquid that includes a base such as an alkali metal hydroxide and a thiosulfate or a nitrous acid alkali metal salt.

In addition, in Patent Document 4, it is disclosed that an oxidizing gas such as chlorine gas or fluorine gas is removed from an exhaust gas by performing a wet type process in a packed column filled with sulfite poorly soluble in water, without using any compound containing sodium ions and the like.

Although these methods are effective in suppressing discharge of oxygen difluoride, concentrations of the alkalis or the reducing agents need to be maintained at high level in order to continuously treat an exhaust gas containing a fluorine element-containing gas in high concentration to obtain a sufficient effect. Due to this, there have been problems where troubles such as clogging easily occur, which increases chemical solution cost, as well as there are needs for waste liquid treatments of the alkalis, the reducing agents, and various kinds of reaction products in discharged liquids.

Additionally, Patent Document 5 discloses a method in which an exhaust gas is reacted with steam under heating to be decomposed into hydrogen fluoride and oxygen. In this method, however, the reaction is performed at a high temperature of from 300 to 400°C, and thus there is a large influence of corrosion due to a high-temperature hydrogen fluoride gas and the like, which limits reactor material, so that it has been difficult to industrially employ the method.

### RELATED ART DOCUMENTS

### Patent Documents

Patent Document 1: JP H02-233122 A
Patent Document 2: JP 2006-231105 A
Patent Document 3: JP 2013-539717 A
Patent Document 4: JP 2000-176243 A
Patent Document 5: JP 2006-289238 A

### SUMMARY OF INVENTION

### Technical Problem

It is an object of the present invention to provide a method for treating a fluorine element-containing exhaust gas that efficiently treats the fluorine element-containing exhaust gas by a wet type method to obtain a treated gas in which toxic fluorine-based gases, such as oxidizing gases including fluorine gas and oxygen difluoride and acidic gases including hydrogen fluoride, are sufficiently reduced.

### Solution to Problem

The present invention relates to the following items [1] to [7]:
[1] A method for treating a fluorine element-containing exhaust gas, characterized by including a first step of contacting the fluorine element-containing exhaust gas with water and a second step of contacting a gas component discharged from the first step with a basic aqueous solution including a reducing agent.
[2] The method for treating a fluorine element-containing exhaust gas according to the [1], in which the fluorine element-containing exhaust gas contains fluorine gas (F₂) and/or hydrogen fluoride (HF).
[3] The method for treating a fluorine element-containing exhaust gas according to the [1] or the [2], in which the reducing agent is a sulfur-based reducing agent.
[4] The method for treating a fluorine element-containing exhaust gas according to the [3], in which the sulfur-based reducing agent is sulfite and/or thiosulfate.
[5] The method for treating a fluorine element-containing exhaust gas according to any of the [1] to the [4], in which at the first step, a fluorine gas concentration in the exhaust gas when contacting the exhaust gas with the water is 40% by volume or less.
[6] The method for treating a fluorine element-containing exhaust gas according to any of the [1] to the [5], in which an oxygen difluoride (OF₂) concentration in the gas component discharged from the first step is 5% by volume or less.
[7] The method for treating a fluorine element-containing exhaust gas according to any of the [1] to the [6], in which an oxygen difluoride (OF₂) concentration in a gas component discharged from the second step is 1 ppm by volume or less.

### Advantageous Effects of Invention

The method for treating a fluorine element-containing exhaust gas according to the present invention can efficiently treat the fluorine element-containing exhaust gas by a wet type method, and, even when treating an exhaust gas including fluorine-based gases such as fluorine gas in high concentration, can sufficiently reduce toxic fluorine-based gases such as oxidizing gases including fluorine gas and oxygen difluoride and acidic gases including hydrogen fluoride in a treated gas to be obtained. By treating the fluorine element-containing exhaust gas in the specific two stages, the invention can highly reduce the fluorine-based gases in the treated gas to be discharged, and can significantly reduce the amount of consumption of the basic aqueous solution including a reducing agent used as a chemical solution, which are economical and efficient. Additionally, even when the fluorine element-containing exhaust gas includes hydrogen fluoride in high concentration, the invention can suppress the amount of consumption of the chemical solution to small.

Furthermore, in the present invention, when the fluorine gas (F₂) concentration in the exhaust gas when contacting the exhaust gas with the water at the first step is 40% by volume or less, the oxygen difluoride (OF₂) concentration in the gas component discharged from the first step can be suppressed, whereby a treatment load at the second step can be further reduced, thus enabling exhaust gas treatment to be efficiently performed.

### BRIEF DESCRIPTION OF DRAWING

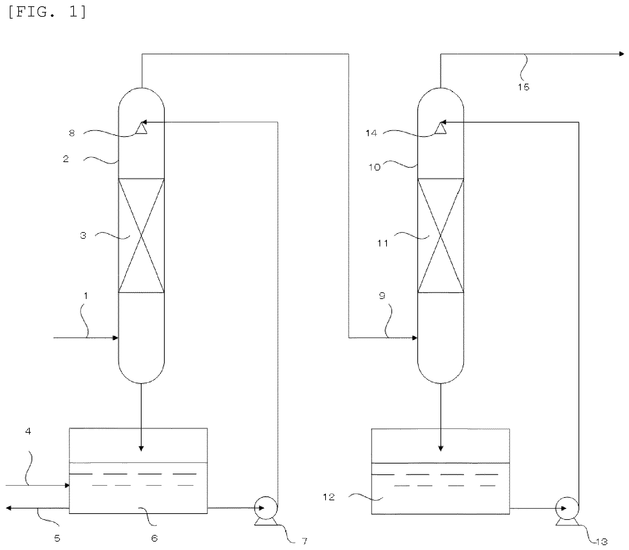

FIG. 1 depicts a schematic diagram of an example of an apparatus for performing a method for treating a fluorine element-containing exhaust gas according to the present invention.

### DESCRIPTION OF EMBODIMENTS

Hereinafter, the present invention will be specifically described.

A method for treating a fluorine element-containing exhaust gas according to the present invention includes a first step of contacting the fluorine element-containing exhaust gas with water and a second step of contacting a gas component discharged from the first step with a basic aqueous solution including a reducing agent.

### <First Step>

At the first step, a fluorine element-containing exhaust gas is contacted with water.

Examples of the fluorine element-containing exhaust gas can include gases containing fluorine-based gases such as F₂, NF₃, SiF₄, COF₂, SF₆, fluorocarbons (such as CF₄, C₂F₆, and C₄F₆). In the present invention, fluorine element-containing exhaust gases such as industrial exhaust gases produced in processes using fluorine-based gases or processes involving occurrences of fluorine-based gases can be treated without any particular limitation. The exhaust gas that is treated in the invention may include oxidizing gases such as oxygen difluoride (OF₂) and/or acidic gases such as hydrogen fluoride (HF).

For example, when the exhaust gas includes a fluorine gas, the fluorine gas in the exhaust gas and water rapidly react with each other to produce hydrogen fluoride and oxygen, as in Reaction Formula (1).

F₂ + H₂O → HF + 1/2O₂ ... (1)

In the contact between the fluorine gas and water, reactivity of the fluorine gas is high, and therefore, it is known that other than the main reaction of Reaction Formula (1) mentioned above, there occurs a side reaction that produces ozone (O₃) and oxygen difluoride (OF₂) depending on conditions. However, the present inventor found that when a fluorine gas concentration in an exhaust gas when contacting the exhaust gas with water is set to 40% by volume or less, the side reaction is suppressed, so that ozone (O₃) is hardly produced, and production of oxygen difluoride (OF₂) is also suppressed to low level.

Thus, at the first step of the present invention, the fluorine gas (F₂) concentration in the exhaust gas when contacting the exhaust gas with the water is preferably 40% by volume or less, and more preferably 30% by volume or less. When the fluorine gas (F₂) concentration in the exhaust gas is set to be within the above range, the fluorine gas (F₂) in the exhaust gas can be sufficiently removed at the first step, and production of ozone (O₃) and oxygen difluoride (OF₂) can be suitably suppressed, so that a load of the second step that will be described later can be reduced to achieve sufficient exhaust gas treatment.

When the exhaust gas contains a highly concentrated fluorine gas (F₂), it is preferable to adjust the fluorine gas (F₂) concentration in the exhaust gas to 40% by volume or less by a method such as dilution with an inert gas such as air before contacting with water. In the present invention, the inert gas means a gas that, under treatment conditions, substantially does not react with components in the exhaust gas, water, and a basic aqueous solution including a reducing agent that is used at the second step and that will be described later, and does not hinder reaction, and examples of the gas include air, nitrogen, and rare gases.

At the first step, as a method for contacting the exhaust gas with water, any conventionally known method for contacting gas with liquid can be employed without any particular limitation. Preferably employable are methods using in-liquid dispersion type apparatuses such as a ventilating/stirring tank or apparatuses such as an absorption column in which gas and liquid are contacted to allow at least a part of a gas component to be absorbed by a liquid component. Specifically, preferably employable are methods using a spraying column, a plate column, a packed column, or a known absorption column equipped with an apparatus such as a jet scrubber, and particularly preferred are methods using packed columns because of simple structure and good absorption efficiency thereof. Methods using such apparatuses can be employed also at the second step that will be described later.

At the first step of the present invention, a fluorine element-containing exhaust gas is contacted with water, whereby, for example, fluorine gas (F₂) contained in the exhaust gas reacts with the water to be converted into hydrogen fluoride (HF) or oxygen difluoride (OF₂). Additionally, hydrogen fluoride (HF) contained in the exhaust gas and the hydrogen fluoride (HF) produced by the reaction of the fluorine gas (F₂) with the water are easily absorbed in water. In the invention, even when an exhaust gas to be treated contains highly concentrated hydrogen fluoride (HF), most thereof can be removed at the first step, thereby enabling suppression of the amount of consumption of the basic aqueous solution including a reducing agent that is used at the second step. Thus, in the invention, as the fluorine element-containing exhaust gas, a gas containing fluorine gas and/or hydrogen fluoride can be suitably used.

In this manner, at the first step, the fluorine gas (F₂), the hydrogen fluoride (HF), and the like in the exhaust gas are reduced, and a gas component containing produced oxygen difluoride (OF₂) or the like is discharged. The gas component discharged at the first step is sent to the second step.

Herein, when the fluorine gas concentration in the exhaust gas is 40% by volume or less, it is preferable since any side reaction that produces oxygen difluoride (OF₂) hardly occurs in the reaction of the first step, and thus the amount of the oxygen difluoride (OF₂) in the gas component that is sent to the second step can be suppressed, which can reduce the load of the second step.

At the first step, the water that comes in contact with the exhaust gas can be used in a circulating manner. However, the concentration of the absorbed hydrogen fluoride (HF) increases as the exhaust gas is treated, and it is thus preferable to exchange the water as an absorbing liquid in a case where the exhaust gas is treated in large amount or continuously. Although the water as the absorbing liquid may be exchanged in a batch or continuous manner, the concentration of the hydrogen fluoride (HF) in the absorbing liquid is preferably maintained constant, and the water is preferably continuously exchanged in order to stabilize the conditions at the second step.

Thus, in the gas discharged from the first step, the fluorine gas (F₂) concentration is sufficiently reduced, and the increase of the oxygen difluoride (OF₂) concentration is suitably suppressed. The oxygen difluoride (OF₂) concentration in the gas component discharged from the first step is preferably 5% by volume or less, and more preferably 1% by volume or less.

### <Second Step>

At the second step, the gas component discharged from the first step is contacted with a basic aqueous solution including a reducing agent.

The gas component discharged from the first step that is to be subjected to the second step usually includes oxygen difluoride (OF₂) either contained in the exhaust gas or produced at the first step, entrained hydrogen fluoride (HF), and the like. The gas component discharged from the first step may include fluorine gas (F₂) unreacted or entrained at the first step. The fluorine gas concentration in the gas component that is to be introduced into the second step is preferably 5% by volume or less, and more preferably 1% by volume or less.

The oxygen difluoride (OF₂) concentration in the gas component that is introduced into the second step is not particularly limited, but is preferably 5% by volume or less, and more preferably 1% by volume or less. At the first step, when the fluorine gas (F₂) concentration in the exhaust gas when contacting the exhaust gas with the water is 40% by volume or less, the OF₂ concentration in the gas component discharged from the first step can be made sufficiently low, and can usually be 5% by volume or less when an initial exhaust gas does not include oxygen difluoride (OF₂). When the oxygen difluoride (OF₂) concentration in the gas component discharged from the first step is high, the gas component may be diluted with an inert gas as appropriate and then introduced into the second step.

At the second step, the oxygen difluoride (OF₂) in the introduced gas component reacts with the reducing agent to become hydrogen fluoride (HF), and the HF in the introduced gas component and the hydrogen fluoride (HF) produced from the oxygen difluoride (OF₂) are removed by reacting with a base.

The basic aqueous solution including a reducing agent that is used at the second step is an aqueous solution including a reducing agent and a base dissolved in water, and is used as an absorbing liquid.

As the reducing agent, a reducing agent that can reduce oxygen difluoride (OF₂) can be used without any particular limitation, and can be selected from, for example, thiosulfates such as sodium thiosulfate, ammonium thiosulfate, and potassium thiosulfate; sulfites such as sodium sulfite, potassium sulfite, and ammonium sulfite; chlorides such as potassium chloride and sodium chloride; bromides such as potassium bromide; iodides such as potassium iodide; nitrites such as sodium nitrite and potassium nitrite; formates such as formic acid, sodium formate, and potassium formate; oxalic acid, hydrazine, and the like. In the present invention, as the reducing agent, preferably used are sulfur-based reducing agents, and more preferably used are thiosulfates and sulfites, from the viewpoint of efficiently removing oxygen difluoride (OF₂).

The concentration of the reducing agent is preferably from 1 to 20% by mass, and more preferably from 1 to 10% by mass in the basic aqueous solution including a reducing agent, although it depends on conditions such as the oxygen difluoride (OF₂) concentration in the gas component to be contacted therewith.

As the base, a base that can remove hydrogen fluoride (HF) can be used without any particular limitation, but preferably used is metal hydroxide, and more preferably used is sodium hydroxide or potassium hydroxide.

The concentration of the base depends on conditions such as the hydrogen fluoride (HF) concentration in the gas component to be contacted. However, liquid properties of the basic aqueous solution including a reducing agent are preferably maintained to be alkaline, and pH thereof is preferably 8 or more, and more preferably 9 or more.

At the second step, as a method for contacting the gas component discharged from the first step with the basic aqueous solution including a reducing agent, any conventionally known method for contacting gas with liquid can be employed without any particular limitation, similarly to the first step. Preferably employable are methods using apparatuses such as an absorption column in which gas and liquid are contacted to allow at least a part of a gas component to be absorbed by a liquid component. Specifically, preferably employable are methods using a spraying column, a plate column, a packed column, or a known absorption column equipped with an apparatus such as a jet scrubber, and a method using a packed column is particularly preferable because of its simple structure and high absorption efficiency. The first step and the second step may employ a method using similar apparatuses or may employ a method using different apparatuses.

At the second step, the basic aqueous solution including a reducing agent that is used as the absorbing liquid can usually be used by being circulated in the absorption column. In the basic aqueous solution including a reducing agent, concentrations of the reducing agent and the base decrease as treatment of the introduced gas component proceeds, and the concentration of an absorbed reaction product increases, so that the basic aqueous solution including a reducing agent can be exchanged when the amount of the treatment is large. The basic aqueous solution including a reducing agent may be exchanged in either a batch or continuous manner. However, usually, exchanging in a batch manner is economical, since the concentrations of fluorine-based toxic gases included in the gas that is introduced into the second step are originally low, and a change of a reducing agent concentration or a base concentration in the basic aqueous solution including a reducing agent is small.

In a gas component (a treated gas) discharged from the second step of the present invention, fluorine-based toxic gases such as fluorine gas (F₂), oxygen difluoride (OF₂), and hydrogen fluoride (HF) are sufficiently removed, and thus, can be a gas substantially including no fluorine-based gas. Specifically, the oxygen difluoride (OF₂) concentration in the gas component discharged from the second step of the invention is preferably 1 ppm by volume or less, and more preferably 0.5 ppm by volume or less. The fluorine gas (F₂) concentration in the gas component discharged from the second step of the invention is preferably 1 ppm by volume or less, and more preferably 0.5 ppm by volume. Additionally, the hydrogen fluoride (HF) concentration in the gas component discharged from the second step of the invention is preferably 3 ppm by volume or less, and more preferably 1.5 ppm by volume or less.

### EXAMPLES

Hereinafter, the present invention will be described more specifically based on Examples, but is not limited thereto.

### <Measurement of Fluorine-Based Gas Concentrations>

In the following Examples and Comparative Examples, concentrations of respective fluorine-based gas elements were measured and quantified in the following manners.

A combined concentration of fluorine gas (F₂) and oxygen difluoride (OF₂) in the gas was obtained by analyzing by a method in which a specified amount of the gas was absorbed by an aqueous solution of potassium iodide and titrated with sodium thiosulfate (an iodine titration method). Lower quantitation limit was able to be adjusted by increasing the amount of the gas to be absorbed, and the combined concentration of fluorine and oxygen difluoride was measured to be 0.05 ppm by volume or more.

When quantitatively analyzing by separating the fluorine gas from the oxygen difluoride in the gas, the oxygen difluoride was quantified using FT-IR method (Fourier Transform Infrared Spectroscopy), and the concentration of the oxygen difluoride was subtracted from the combined concentration of the fluorine gas and the oxygen difluoride to obtain the concentration of the fluorine gas. In the case of using a long optical path gas cell having an optical path length of 10 m as a gas cell of the FT-IR, the lower quantitation limit of the oxygen difluoride concentration is 0.5 ppm by volume.

Hydrogen fluoride concentration was quantified using FT-IR method. The lower quantitation limit of the hydrogen fluoride concentration is 0.5 ppm by volume when a gas cell of 15 cm is used.

### [Example 1]

Treatment of an exhaust gas was performed by using an apparatus equipped with a first absorption column (2) having a diameter of 500 mm in which cascade mini-rings as a filling material were filled at a filling height of 4 m in a filling layer 1(3) and a second absorption column (10) having a diameter of 500 mm in which cascade mini-rings as a filling material were filled at a filling height of 4 m in a filling layer 2(11). FIG. 1 depicts a schematic diagram.

At the first step performed on the first absorption column (2) side, water was introduced into a circulation liquid tank 1 (6), and circulated at 4 m³/hr. The amount of water introduced and the amount of the circulation liquid discharged were adjusted such that an HF concentration in the circulation liquid tank 1(6) was 3% by mass.

At the second step performed on the second absorption column (10) side, a basic aqueous solution including a reducing agent (pH at charging: 13.5) prepared so that KOH as the base had a concentration of 2% by mass and potassium sulfite (K₂SO₃) as the reducing agent had a concentration of 12% by mass was charged in a circulation liquid tank 2 (12), and circulated at 4 m³/hr.

The exhaust gas to be treated was a gas including 25% by volume of F₂ and 10% by volume of HF, but not including OF₂, in which the rest was nitrogen gas. This gas was introduced into the first absorption column (2) configured to perform the first step, at 30 m³/hr from an exhaust gas introducing pipe (1). The exhaust gas introduced into the first absorption column (2) was sufficiently contacted with water emitted from a shower nozzle 1(8) in the first absorption column (2) provided with the filling layer 1(3), and a gas component after the contact with the water was discharged from a column top of the first absorption column (2). The discharged gas component was introduced into the second absorption column (10) configured to perform the second step through an exhaust gas introducing pipe 9. The gas component discharged from the first absorption column (2) and introduced into the second absorption column (10) was a gas including 2,000 ppm by volume of F₂, 1,300 ppm by volume of HF, and 4,100 ppm by volume of OF₂.

The gas component introduced into the second absorption column (10) was sufficiently contacted with a basic aqueous solution including a reducing agent emitted from a shower nozzle 2(14) in the second absorption column (10) provided with the filling layer 2(11). The gas component after having been contacted with the basic aqueous solution including a reducing agent was discharged as a treated gas from a column top of the second absorption column (10) through a treated gas discharging pipe (15).

Table 1 has listed concentrations of respective fluorine-based gas elements in the treated gas discharged from the treated gas discharging pipe (15) and amounts of consumption of chemical solution (the basic aqueous solution including a reducing agent) in the second step performed on the second absorption column (10) side. Neither F₂ nor OF₂ nor HF was detected from the treated gas. Additionally, the amounts of the chemical solution consumed in the second absorption column (10) were 0.7 kg/hr for KOH as the base and 1.9 kg/hr for K₂SO₃ as the reducing agent.

### [Example 2]

Exhaust gas treatment was performed in the same manner as Example 1 except that, in Example 1, the F₂ concentration in the exhaust gas to be treated was 40% by volume. The gas component discharged from the first absorption column (2) and introduced into the second absorption column (10) was a gas including 20,000 ppm by volume of F₂, 1,300 ppm by volume of HF, and 42,000 ppm by volume of OF₂.

Table 1 has listed concentrations of respective fluorine-based gas elements in the treated gas discharged from the treated gas discharging pipe (15) and amounts of consumption of chemical solution (the basic aqueous solution including a reducing agent) in the second step. Neither F₂ nor HF was detected from the treated gas, and 1 ppm by volume of OF₂ was detected therefrom. In addition, the amounts of the chemical solution consumed in the second absorption column (10) were 6.7 kg/hr for KOH as the base and 18 kg/hr for K₂SO₃ as the reducing agent.

### [Example 3]

Exhaust gas treatment was performed in the same manner as Example 1 except that, in Example 1, sodium thiosulfate (Na₂S₂O₃) was used in place of potassium sulfite (K₂SO₃), as the reducing agent in the chemical solution (the basic aqueous solution including a reducing agent) used at the second step, and the concentration of Na₂S₂O₃ was set to 3% by mass.

Table 1 has listed concentrations of respective fluorine-based gas elements in the treated gas discharged from the treated gas discharging pipe (15) and amounts of consumption of chemical solution (the basic aqueous solution including a reducing agent) in the second step. Neither F₂ nor OF₂ nor HF was detected from the treated gas. Additionally, the amounts of the chemical solution consumed in the second absorption column (10) were 0.7 kg/hr for KOH as the base and 1.9 kg/hr for Na₂S₂O₃ as the reducing agent.

### [Example 4]

Exhaust gas treatment was performed in the same manner as Example 1 except that, in Example 1, potassium iodide (KI) was used in place of potassium sulfite (K₂SO₃), as the reducing agent in the chemical solution (the basic aqueous solution including a reducing agent) used at the second step, and the concentration of KI was set to 3% by mass.

Table 1 has listed concentrations of respective fluorine-based gas elements in the treated gas discharged from the treated gas discharging pipe (15) and amounts of consumption of chemical solution (the basic aqueous solution including a reducing agent) in the second step. Neither F₂ nor OF₂ nor HF was detected from the treated gas. Additionally, the amounts of the chemical solution consumed in the second absorption column (10) were 0.7 kg/hr for KOH as the base and 2.0 kg/hr for KI as the reducing agent.

### [Example 5]

Exhaust gas treatment was performed in the same manner as Example 1 except that, in Example 1, potassium chloride (KCl) was used in place of potassium sulfite (K₂SO₃), as the reducing agent in the chemical solution (the basic aqueous solution including a reducing agent) used at the second step, and the concentration of KCl was set to 10% by mass.

Table 1 has listed concentrations of respective fluorine-based gas elements in a treated gas discharged from the treated gas discharging pipe (15) and amounts of consumption of chemical solution (the basic aqueous solution including a reducing agent) in the second step. Neither F₂ nor HF was detected from the treated gas, and 0.3 ppm by volume of OF₂ was detected therefrom. Additionally, the amounts of the chemical solution consumed in the second absorption column (10) were 0.7 kg/hr for KOH as the base and 1.8 kg/hr for KCl as the reducing agent.

### [Comparative Example 1]

Using an apparatus that is equipped with the first absorption column (2) and the circulating liquid tank 1(6) and that is the same as the apparatus used at the first step of Example 1, water was circulated similarly to Example 1, and the amount of the water to be introduced and the amount of a circulating liquid to be discharged were adjusted so that the HF concentration in the circulating liquid tank 1(6) was 1% by mass. The same exhaust gas as that of Example 1 was introduced from the exhaust gas introducing pipe 1(1) and treated, whereby a gas component discharged from the column top of the first absorption column (2) was obtained as a treated gas. The concentrations of respective fluorine-based gas elements in the treated gas were 980 ppm by volume for F₂, 670 ppm by volume for HF, and 4,050 ppm by volume for OF₂, as listed in Table 1.

### [Comparative Example 2]

Exhaust gas treatment was performed by, in Example 1, bypassing the first step to introduce the exhaust gas to be treated from the exhaust gas introducing pipe 2(9) into the second absorption column (10) and in the same manner as the second step of Example 1.

Table 1 has listed concentrations of respective fluorine-based gas elements in the treated gas discharged from the treated gas discharging pipe (15) and amounts of consumption of chemical solution (the basic aqueous solution including a reducing agent) . Neither F₂ nor HF nor OF₂ was detected from the treated gas. However, the amounts of the chemical solution consumed in the second absorption column (10) were 53 kg/hr for KOH as the base and 127 kg/hr for K₂SO₃ as the reducing agent, resulting in that the consumption of the chemical solution was larger than Example 1.

**Table 1**

| | Concentrations in exhaust gas (% by volume) | | Concentrations in treated gas (ppm by volume) | | | Amounts of consumption of chemical solution (kg/hr) | | |
|---|---|---|---|---|---|---|---|---|
| | F₂ | HF | OF₂ | F₂ | HF | KOH | Reducing agent | |
| EX. 1 | 25 | 10 | <0.05 | <0.05 | <0.5 | 0.7 | K₂SO₃ | 1.9 |
| EX. 2 | 40 | 10 | 1 | <0.05 | <0.5 | 6.7 | K₂SO₃ | 18 |
| EX. 3 | 25 | 10 | <0.05 | <0.05 | <0.5 | 0.7 | Na₂S₂O₃ | 1.9 |
| EX. 4 | 25 | 10 | <0.05 | <0.05 | <0.5 | 0.7 | KI | 2.0 |
| EX. 5 | 25 | 10 | 0.4 | <0.05 | <0.5 | 0.7 | KCl | 1.8 |
| COMP-EX. 1 | 25 | 10 | 4,050 | 980 | 670 | | - | - |
| COMP-EX. 2 | 25 | 10 | <0.05 | <0.05 | <0.5 | 53 | K₂SO₃ | 127 |

### Industrial Applicability

The method for treating an exhaust gas according to the present invention is suitable as a method for treating a fluorine element-containing exhaust gas produced in a process using a fluorine-based gas as an etching or cleaning gas, a process for manufacturing a fluorine-based gas, or the like to obtain a treated gas substantially including no fluorine-based gas.

### Reference Signs List

1: Exhaust gas introducing pipe 1
2: First absorption column
3: Filling layer 1
4: Water supplying pipe
5: HF aqueous solution discharging pipe
6: Circulating liquid tank 1
7: Circulation pump 1
8: Shower nozzle 1
9: Exhaust gas introducing pipe 2
10: Second absorption column
11: Filling layer 2
12: Circulating liquid tank 2
13: Circulation pump 2
14: Shower nozzle 2
15: Treated gas discharging pipe

## Claims

1. A method for treating a fluorine element-containing exhaust gas, **characterized by** comprising:
a first step of contacting the fluorine element-containing exhaust gas with water; and
a second step of contacting a gas component discharged from the first step with a basic aqueous solution including a reducing agent.

2. The method for treating a fluorine element-containing exhaust gas according to claim 1, wherein the fluorine element-containing exhaust gas contains fluorine gas and/or hydrogen fluoride.

3. The method for treating a fluorine element-containing exhaust gas according to claim 1 or 2, wherein the reducing agent is a sulfur-based reducing agent.

4. The method for treating a fluorine element-containing exhaust gas according to claim 3, wherein the sulfur-based reducing agent is sulfite and/or thiosulfate.

5. The method for treating a fluorine element-containing exhaust gas according to any of claims 1 to 4, wherein at the first step, a fluorine gas concentration in the exhaust gas when contacting the exhaust gas with the water is 40% by volume or less.

6. The method for treating a fluorine element-containing exhaust gas according to any of claims 1 to 5, wherein an oxygen difluoride concentration in the gas component discharged from the first step is 5% by volume or less.

7. The method for treating a fluorine element-containing exhaust gas according to any of claims 1 to 6, wherein an oxygen difluoride concentration in a gas component discharged from the second step is 1 ppm by volume or less.
